# EUROPEAN PATENT SPECIFICATION

(11) **EP 0 772 974 B1**
(45) Date of publication and mention of the grant of the patent: **14.08.2002**
(21) Application number: 96105468.1
(22) Date of filing: 04.04.1996
(51) Int. Cl.: A01N 37/10

(54) **Benzyl benzoate containing compositions for controlling planthoppers**
Benzyl-benzoat enthaltende Zusammensetzungen zur Bekämpfung von Zikaden
Compositions contenant du benzoate de benzyle pour lutter contre les cigales

(30) Priority: 01.11.1995 JP 28540295
(43) Date of publication of application: 14.05.1997
(73) Proprietor: NARO National Agricultural Research Organisation, Ibaraki 305-8517 (JP)
(72) Inventor: Seino, Yoshito, c/o Nation.Center for Seeds and,, Tsukuba-shi, Ibaraki 305-0852 (JP); Suzuki, Yoshito, c/o National Agricultural,, Tsukuba-shi, Ibaraki 305-8686 (JP); Sogawa, Kazushige, c/o Japan Intern. Research, Tsukuba-shi, Ibaraki 305 -8686 (JP)
(74) Representative: VOSSIUS & PARTNER

(56) References cited:
- EP-A- 0 173 229
- EP-A- 0 390 741
- EP-A- 0 583 774
- GB-A- 2 098 069
- APPL.ENTOMOL.ZOOL., vol. 31, no. 4, 1996, pages 467-473, XP000618371 Y.SEINO ET AL.: "An Ovicidal Substance Produced by Rice Plants in Response to Ovipoition by the Whitebacked Planthopper, Sogatella furcifera (HORVàTH) (Homoptera: Delphacidae)"

## Description

The present invention relates to the use of benzyl benzoate as an ovicide against the eggs of planthoppers such as white-backed planthoppers (Sogatella furcifera Horvath) and brown planthoppers (Nilaparvata lugens Stal).

Plant hoppers which are pests on rice plants come flying to Japan in the rainy season. They deposit their eggs on rice plants and propagate. Planthoppers are mainly controlled with insecticides that are applied to larvae and adults. However, planthoppers often acquire resistance to the insecticides and, therefore, satisfactory insecticidal effects are not always obtained today. Varieties of rice plants which have resistance to planthoppers and the planthopper-resistance genes are known. Some planthopper-resistant varieties were put to practical use in foreign countries but the destruction of their resistance occurred. There are no planthopper-resistant varieties which have been put to practical use in Japan. Hence, there is a need for the development of agents that exhibit good control on planthoppers.

Planthoppers deposit their eggs on the leaf sheaths of rice plants, as well as on the midribs of their leaf blades. Liquid immersion is often observed at oviposition sites. It has been verified that the mortality of the eggs is higher at the immersed sites than at non-immersed sites. The death of the eggs at the sites of immersion which occurs due to the oviposition by planthoppers begins to manifest from the tillering stage of rice plants and reaches a maximum at the maximum tiller number stage. The hatchability of planthopper's eggs laid at the maximum tiller number stage is low and their growth is suppressed. Since the eggs of planthoppers can grow in distilled water, it is suggested that a substance having an ovicidal activity may be present at the immersed sites.

EP-A-0583774 discloses compositions for protecting plants against arthropods. US-A-5082860 describes the use of a carbamate for controlling cicadas. GB-A-2098069 discloses compositions containing a phenoxy-benzene derivative for controlling parasites of rice. According to US-A-4666940 benzyl benzoate is useful in controlling house dust mites.

Accordingly, an object of the present invention is to provide a method for controlling planthoppers.

Another object of the present invention is to provide compositions for controlling planthoppers by their good ovicidal effects.

The inventors paid attention to an ovicidal substance that was believed to be present at the sites of immersion which was induced by the oviposition by planthoppers and they conducted studies. As a result, they confirmed that the active substance was benzyl benzoate and provided planthopper control compositions which comprised benzyl benzoate as an active ingredient. The present invention has been accomplished on the basis of the compositions.

Benzyl benzoate has therefore been used as an acaricide but there is no report that has ever been published to describe its ovicidal effect on the eggs of planthoppers.

The present invention provides a method for controlling planthoppers by applying benzyl benzoate.

The present invention also provides compositions for controlling planthoppers, which comprise benzyl benzoate as an active ingredient.

Figure 1 shows the results of the bioassay on Florisil column chromatography fractions from two sites, the immersed site of oviposition by white-backed planthoppers and the non-oviposition site.

Figure 2 shows the results of the GC-MS (EI) analysis on 40% ether/hexane 20-30 ml fractions from two sites, the immersed site of oviposition by white-backed planthoppers and the non-oviposition site.

Figure 3 shows the mass spectrum of the substance specifically present in a 40% ether/hexane 20-30 ml fraction from the immersed site of oviposition by white-backed planthoppers.

Figure 4 shows the results of the bioassay on standard benzyl benzoate against the eggs of white-backed planthoppers.

Figure 5 shows the results of the bioassay on standard benzyl benzoate against the eggs of brown planthoppers.

Benzyl benzoate which is an active ingredient in the compositions of the present invention can be obtained by reacting benzoic acid with magnesium chloride according to a conventional synthesis method. Alternatively, commercially available products can be used.

Benzyl benzoate may be used alone, but, more commonly, it is mixed with solid vehicles, liquid vehicles, surfactants or other adjuvants and used in the form of a dust, an emulsifiable concentrate, a suspension, a wettable powder or the like. The amount of benzyl benzoate in the composition can be appropriately varied depending on the formulation over a typical range of 5-95% by weight.

Exemplary solid vehicles include kaolin clay, attapulgite clay, talc, bentonite, diatomite, calcium carbonate, silicic anhydride, soybean meal, walnut meal, starch, wood meal, crystalline cellulose, polyvinyl chloride, polyvinyl acetate, polyvinyl alcohol and the like. Exemplary liquid vehicles include water, methanol, ethanol, ethylene glycol, acetone, methyl ethyl ketone, ethyl ether, benzene, toluene, xylene, carbon tetrachloride, kerosine, mineral oils and the like.

Surfactants may be used for such purposes as emulsification, dispersion and wetting. Any nonionic, anionic, cationic and amphoteric surfactants can be used. Commonly, nonionic and anionic surfactants are preferably used.

Exemplary nonionic surfactants include polyoxyethylene alkyl ethers, polyoxyethylene alkyl allyl ethers, polyoxyethylene sorbitan fatty acid esters, sorbitan fatty acid esters, polyoxyethylene-polyoxypropylene block copolymers and the like.

Exemplary anionic surfactants include alkylsulfuric acid ester salts, alkyl(aryl)sulfonates, dialkylsulfosuccinates, polyoxyethylenealkylarylether phosphoric acid ester salts, naphthalenesulfonic acid-formalin condensates and the like.

In order to improve the properties of the compositions and enhance their efficacy, adjuvants such as casein, gelatin, albumin, lignin sulfonates, alginates, glue, carboxymethylcellulose (CMC), acacia gum and the like may be added to the compositions.

The planthopper control compositions of the present invention can be applied, for example, to the leaf sheaths and surfaces of rice plants at the seedling stage prior to tillering or after the rice plants come into ears.

The planthopper control compositions of the present invention can be used in aqueous solutions, for example, in an amount of 15-25 ppm, preferably 20-25 ppm in term of the active ingredient.

The planthoppers that can be controlled by the compositions of the present invention include white-backed plant hoppers and brown plant hoppers.

The control compositions of the present invention exhibit excellent ovicidal effects on the eggs laid by planthoppers and these are effective in preventing the serious damage that may be caused to rice plants by planthoppers.

The above disclosure generally describes the present invention. A more complete understanding can be obtained by reference to the following specific examples which are provided herein for the purpose of illustration only, and are not intended to limit the scope of the present invention.

### [Reference Example] Isolation and Identification of A Substance Having Ovicidal Activity

Female adult white-backed planthoppers were released on rice plants at the tillering stage and the rice plants were collected 1-2 days after the insects laid eggs. The collected sites were subjected to successive extraction with 70% ethanol and diethyl ether. The diethyl ether was distilled off and the residue was then fractionated with Florisil using various kinds of solvents.

The resulting Florisil fractions were concentrated to dryness. After the fraction was dissolved in water to a given volume, an aliquot was subjected to gas chromatography and the remaining was bioassayed.

### (Analytical conditions)

GC-MS: HP5890 Series II (gas chromatograph, Hewllett-Packard Co.) + HP5971 (mass spectrometer)
Column: HP-5 (0.25µm i.d. x 30 m)
Heated-up to 50 °C, which was maintained for 1 minute
Heating rate: 10°C/min
Maintained at 300 °C for 4 minutes
Carrier gas: Helium (0.625 ml/min)
EI-ionization voltage: 70 eV

### (Bioassay for Rice Plant Extract)

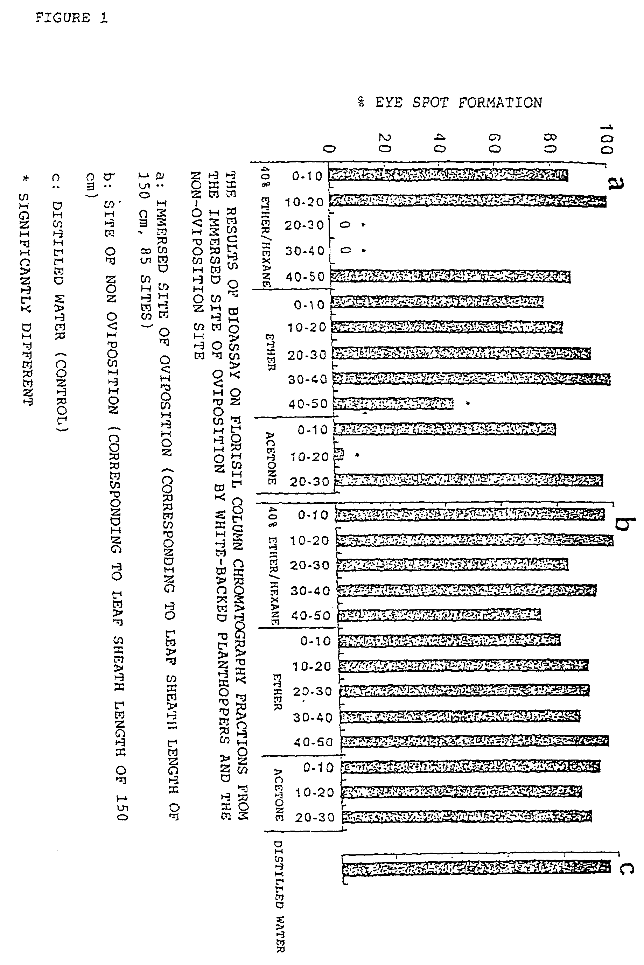

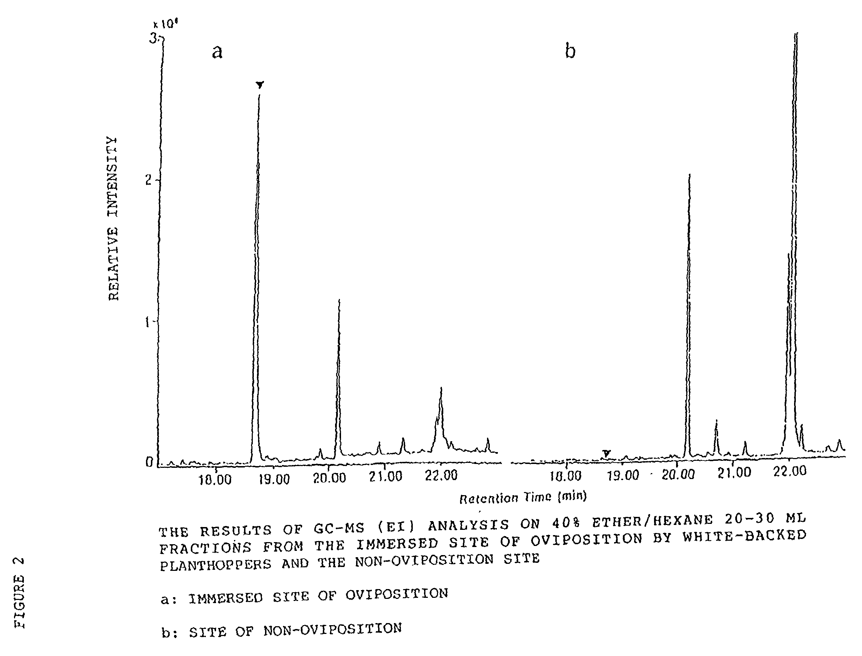

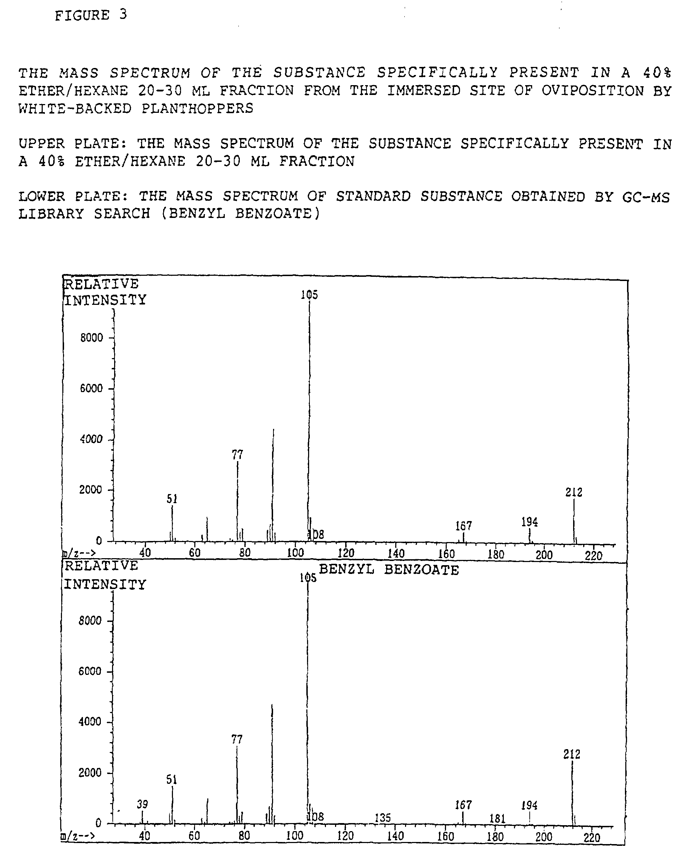

The aqueous solutions of various fractions were used as liquid samples. The eggs of white-backed planthoppers collected from seedlings were immersed in the liquid samples. As a result, ovicidal activity was observed in specific fractions from the immersed site (Figure 1, the 40% ether/hexane 20-30 ml fraction and 30-40 ml fraction). The results of the GC-MS analysis on the ovicidally active fraction from the immersed site (40% ether/hexane 20-30 ml fraction) were compared with those of the GC-MS analysis on the corresponding fraction from the control site of non-oviposition (Figure 2), and the substance present only at the immersed site (retention time under the above GC-MS conditions: 18.7 min) was subjected to mass spectrum analysis, which identified the substance as benzyl benzoate (Figure 3). The same analysis was conducted on the 40% ether/hexane 30-40 ml fraction to identify benzyl benzoate.

### [Experimental Example] Test for Ovicidal Effect on Plant Hopper Eggs

Since the substance exhibiting the ovicidal activity was identified as benzyl benzoate, a bioassay was conducted on standard benzyl benzoate to determine the effective concentrations against the eggs of planthoppers (both white-backed and brown planthoppers).

One milliliter of benzyl benzoate (Wako Pure Chemical Industries Ltd., guaranteed grade) was charged in a separating funnel of 100 ml in volume and 80 ml of pure water was added. The mixture was shaken and left to stand at 25 °C for 48 hours. Thereafter, 50 ml of the supernatant aqueous layer was collected with a pipette. An aliquot (10 ml) of the collected aqueous layer was used for concentration determinations and the remaining was used for the bioassay.

Ten milliliters of the collected aqueous layer was subjected to three extractions each with 10 ml of diethyl ether in a separating funnel. The resulting diethyl ether layer was dried over anhydrous Na₂SO₄. After the dried matter was dissolved in water to a given volume, the concentration of a saturated aqueous solution of benzyl benzoate was determined at 25 °C by gas chromatography.

The saturated aqueous solution of benzyl benzoate was diluted to prepare liquid samples of 25.4, 12.7, 6.4, 3.2 and 1.6 ppm. A bioassay was conducted on the thus prepared five samples plus pure water (sample of 0 ppm). The liquid samples (250 µl) were charged into vial bottles (4 x 1.5 cm i.d.) and 30 eggs of the planthopper on Tetron gauze (6 x 6 mm) which were not older than 6 hours were added. After being capped, the bottles were stored at 25°C. The survival of the eggs was confirmed after 7 days by checking the formation of eye spots on the eggs.

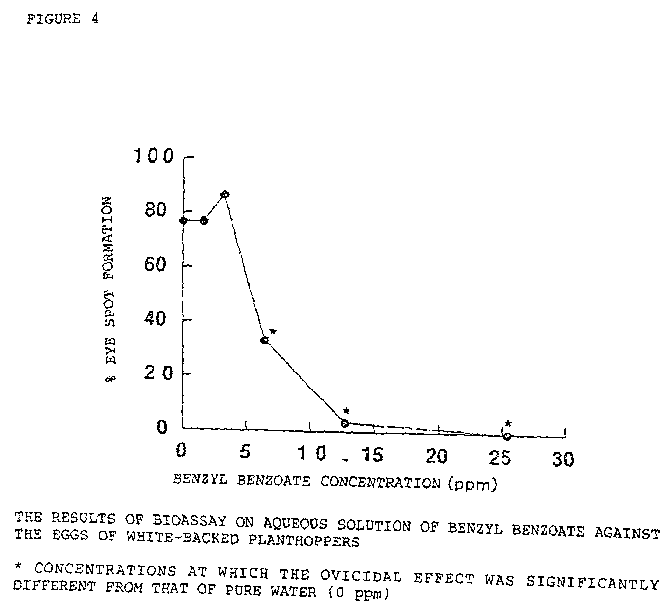

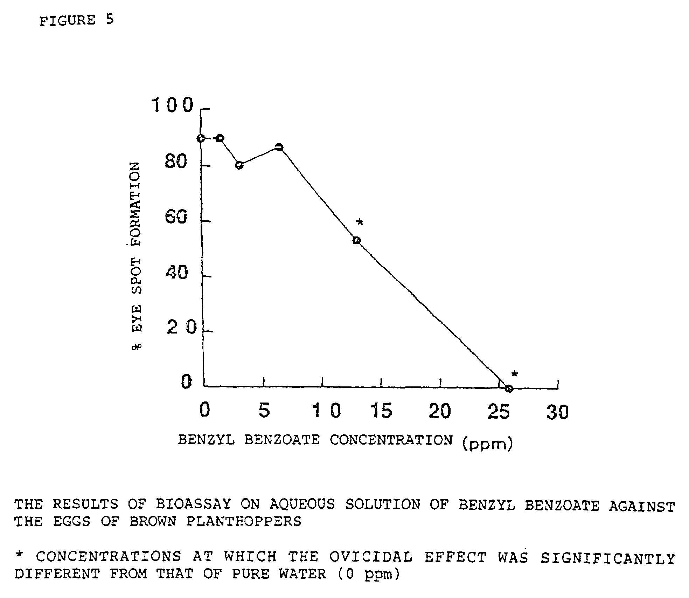

The results of the bioassay were compared statistically between the case of pure water and those of the liquid samples by Fisher's exact test with Boferroni-adjusted probabilities for the survival rate of the eggs. As a result, it was clear that benzyl benzoate exhibited the ovicidal activity at a concentration of at least 6.4 ppm against white-backed planthoppers and at least 12.7 ppm against brown planthoppers (Figures 4 and 5).

### [Formulation Example 1] Dust

Benzyl benzoate (5 parts by weight), kaolin clay (85 parts by weight) and talc (10 parts by weight) were ground and mixed in a blender to prepare a dust.

### [Formulation Example 2] Suspension

Benzyl benzoate (50 parts by weight), polyoxyethylene sorbitan monooleate (3 parts by weight), CMC (3 parts by weight) and water (44 parts by weight) were mixed and wet-ground to prepare a suspension.

### [Formulation Example 3] Wettable Powder

Benzyl benzoate (95 parts by weight), calcium lignin sulfonate (3 parts by weight) and sodium lauryl sulfate (2 parts by weight) were thoroughly ground and mixed to prepare a wettable powder.

## Claims

1. Use of benzyl benzoate as an ovicide for the eggs of planthoppers.

2. Use according to claim 1, wherein the benzyl benzoate is applied to a rice plant.

3. Use according to claim 1 or 2, wherein the planthoppers are selected from white-backed planthoppers and brown planthoppers.

4. Use according to any of claims 1 to 3, wherein the benzyl benzoate is applied at a concentration of 15 to 25 ppm.

5. Use according to claim 4, wherein the benzyl benzoate is applied at a concentration of 20 to 25 ppm.

## Patentansprüche

1. Verwendung von Benzylbenzoat als Ovizid für Zikadeneier.

2. Verwendung nach Anspruch 1, wobei das Benzylbenzoat auf eine Reispflanze aufgebracht wird.

3. Verwendung nach Anspruch 1 oder 2, wobei die Zikaden aus der Gruppe der Weißrückenzikaden und Braunen Zikaden ausgewählt sind.

4. Verwendung nach einem der Ansprüche 1 bis 3, wobei das Benzylbenzoat in einer Konzentration von 15 bis 25 ppm aufgebracht wird.

5. Verwendung nach Anspruch 4, wobei das Benzylbenzoat in einer Konzentration von 20 bis 25 ppm aufgebracht wird.

## Revendications

1. Utilisation de benzoate de benzyle en tant qu'ovicide pour les oeufs de cicadelles.

2. Utilisation selon la revendication 1, dans laquelle le benzoate de benzyle est appliqué à un plant de riz.

3. Utilisation selon la revendication 1 ou 2, dans laquelle les cicadelles sont choisies parmi les cicadelles à dos blanc et les cicadelles brunes.

4. Utilisation selon l'une quelconque des revendications 1 à 3, dans laquelle le benzoate de benzyle est appliqué à une concentration de 15 à 25 ppm.

5. Utilisation selon la revendication 4, dans laquelle le benzoate de benzyle est appliqué à une concentration de 20 à 25 ppm.
